# FASCICULE DE BREVET EUROPEEN

(11) **EP 1 666 386 B1**
(45) Date de publication et mention de la délivrance du brevet: **14.01.2009**
(21) Numéro de dépôt: 04405750.3
(22) Date de dépôt: 03.12.2004
(51) Int. Cl.: B65G 21/20, B65G 47/244

(54) **Méthode d'orientation d'éléments en plaque et dispoitif pour la mise en oeuvre de cette méthode**
Vorrichtung und Verfahren zum Ausrichten von flachen Gegenständen
Device and method for orienting flat articles

(43) Date de publication de la demande: 07.06.2006
(73) Titulaire: BOBST S.A., 1001 Lausanne (CH)
(72) Inventeur: Pahud, Marc, 1033 Cheseaux (CH)
(74) Mandataire: Poirier, Jean-Michel Serge

(56) Documents cités:
- EP-A- 0 881 173
- US-A- 4 807 739
- US-A- 5 282 528
- US-A- 5 400 896

## Description

La présente invention a pour objet un dispositif de pivotement d'éléments en plaque défilant dans une machine les travaillant, notamment destinée à l'industrie de l'emballage pour la confection de boîtes en carton par exemple.

De telles boîtes sont réalisées à partir d'articles plans découpés lors d'une opération préalable, puis pliés et collés dans une machine communément appelée plieuse-colleuse en vue d'obtenir des boîtes sous une forme pliée qu'il suffira de mettre en volume pour en faire bon usage. Ce sont de tels articles, même partiellement pliés, qui seront dénommés éléments en plaque dans la description qui va suivre, selon une appellation générique.

Afin de réaliser les différentes opérations nécessaires au pliage et au collage des éléments en plaque, ces derniers sont transportés au sein de la plieuse-colleuse dans différentes stations au moyen de transporteurs à rouleaux ou à bandes.

Selon la complexité des boîtes que l'on souhaite obtenir avec de telles machines, il est souvent nécessaire de modifier l'orientation initiale des éléments en plaque en les plaçant dans une nouvelle position. Ainsi, en faisant par exemple pivoter ces articles sur eux-même de 90° ou de 180°, il devient plus aisé de réaliser certaines opérations visant le pliage des pattes ou des pans des éléments convoyés. Parfois même, un pivotement de 180° permet d'éviter, à la série d'éléments en plaque travaillés, de devoir procéder à un second passage en machine pour en achever pleinement le pliage.

Pour faciliter de telles opérations de pliage, il a déjà été proposé, dans le brevet US 5'282'528, un dispositif transporteur pour une plieuse-colleuse dite à deux coordonnées, dans lequel deux bandes transporteuses étaient disposées à angle droit l'une de l'autre. Un dispositif de transfert était encore disposé à l'angle de ces deux transporteurs pour assurer le passage des éléments en plaque d'un transporteur à l'autre. Ne permettant pas de travailler en ligne droite, ce système avait l'inconvénient d'augmenter sensiblement l'encombrement nécessaire par rapport à une machine rectiligne. En outre, si l'on désirait exécuter un pivotement des éléments en plaque de 180°, deux systèmes de pivotement à 90° disposés en série devenaient nécessaires.

Dans le document US.4'807'739, il a déjà été proposé de changer l'orientation d'articles à surfaces de contact planes en utilisant deux voies de transport disposées côte à côte, entraînées chacune séparément à des vitesses différentes de manière à provoquer une rotation des articles en contact simultanément avec ces deux voies. Pour pouvoir entraîner deux portions de surface de contact d'un même article à des vitesses différentes, il faut que la masse spécifique de cet article soit suffisante pour engendrer, entre chaque voie de transport et la portion de surface correspondante, une force de frottement apte à assurer l'entraînement de chaque portion de surface à une vitesse différente. C'est notamment le cas lorsque des piles de feuilles constituent par exemple de tels articles. Or, dans le cas où la masse spécifique des articles transportés est faible, des glissements, parfois aléatoires, se produisent et il devient impossible de contrôler le pivotement de tels éléments.

Pour pallier cet inconvénient, le document EP 881'173 propose, pour des éléments en plaque de faible masse spécifique, un transporteur à rouleaux comprenant des moyens pour changer l'orientation de ces éléments autour d'axes perpendiculaires au plan du transporteur. Ce dernier est formé de deux voies parallèles de rouleaux, montées au-dessus d'un caisson dans lequel est agencé un système d'aspiration permettant de plaquer contre ces rouleaux, les éléments convoyés à cheval sur ces deux voies. Des faits conjugués que les voies soient animées de vitesses différentes, que ces vitesses soient réglables et que l'aspiration permette d'augmenter la force de frottement de ces éléments convoyés simultanément sur chacune de ces voies, il devient possible de modifier et de contrôler l'orientation des éléments en plaque transitant sur ce transporteur.

Par ailleurs, ce dispositif a la particularité de pouvoir déplacer transversalement le châssis supportant les deux voies par rapport à son bâti aligné sur l'axe longitudinal de la machine. Cette possibilité a pour but de permettre le repositionnement relatif des éléments en plaque sur cet axe longitudinal avant qu'ils ne quittent le transporteur. En effet, il avait été constaté qu'en fonction de leur forme ces éléments en plaque pouvaient subir une translation latérale en cours de pivotement sur le transporteur. De ce fait, il convenait de tenir compte de cette translation inopinée en déplaçant d'avance les voies du transporteur, ou les stations subséquentes de la machine, d'une quantité égale mais opposée.

Fonctionnant à satisfaction pour la majorité des éléments travaillés, il a néanmoins été constaté que ce transporteur à rouleaux ne permettait pas de résoudre un problème qui survenait lorsque la surface des éléments en plaque convoyés en contact avec le transporteur présentait un fort rapport longueur/largeur ou était fortement asymétrique par rapport à l'axe longitudinal de la machine. Une telle asymétrie pouvant être constatée par exemple sur certaines boîtes à bière ou sur d'autres éléments en plaque présentant, dans la surface en contact avec le transporteur, une large ouverture fortement désaxée par rapport à la ligne mitoyenne qui sépare les deux voies de rouleaux, gauche et droite, de ce transporteur.

Lorsqu'un élément en plaque présentant de telles caractéristiques arrive sur ce transporteur, il commence à pivoter puis rapidement stoppe sa rotation sur lui-même dans une position non désirée, en n'ayant qu'entamé sa rotation à 90° ou à 180°. L'élément en plaque poursuit ensuite son transit sur le transporteur, entraîné à la vitesse de l'une des voies seulement tout en glissant sur l'autre voie. N'étant pas suffisamment tourné, cet élément produit à la sortie du transporteur un bourrage inévitable malgré la présence d'un correcteur de position, non illustré, précédant les outils de pliage aval de la machine.

Le but de la présente invention vise à remédier, au moins en partie, aux inconvénients des solutions susmentionnées, en particulier aux inconvénients relatifs à la dernière solution, de façon à ce que tout type d'élément en plaque, même fortement asymétrique, puisse être correctement pivoté dans le plan du transporteur.

A cet effet, la présente invention a pour objet un dispositif de pivotement d'éléments en plaque selon la revendication 1.

Le principal avantage résultant de la présente invention réside dans le fait que la gamme de boîtes pouvant être façonnées au moyen d'une plieuse-colleuse équipée d'un tel dispositif de pivotement n'est désormais plus limitée par l'exclusion de certains types de boîtes aux formes particulières. De plus, dans les cas où le contrôle du pivotement de certains types de boîtes devenait auparavant limite, l'objet de la présente invention à l'avantage de pouvoir repousser cette limité, d'assurer la fiabilité de ce contrôle et même d'augmenter la vitesse de production sans perdre le contrôle de l'orientation des boîtes.

L'invention sera mieux comprise à l'étude d'un mode de réalisation préféré, pris à titre nullement limitatif et illustré par les figures annexées dans lesquelles:
La figure 1 est une vue en plan illustrant un dispositif de l'art antérieur.
Les figures 2a, 2b et 2c sont des schémas utiles à la compréhension de la problématique rencontrée dans l'art antérieur.
La figure 2d est un schéma illustrant la solution apportée à cette problématique par la présente invention.
La figure 3 est une vue schématique en plan d'un dispositif de pivotement d'éléments en plaque conforme à l'objet de la présente invention.
La figure 4 est une vue schématique en plan d'une première variante de la présente invention.
La figure 5 est une vue schématique en plan d'une variante similaire à la présente invention.

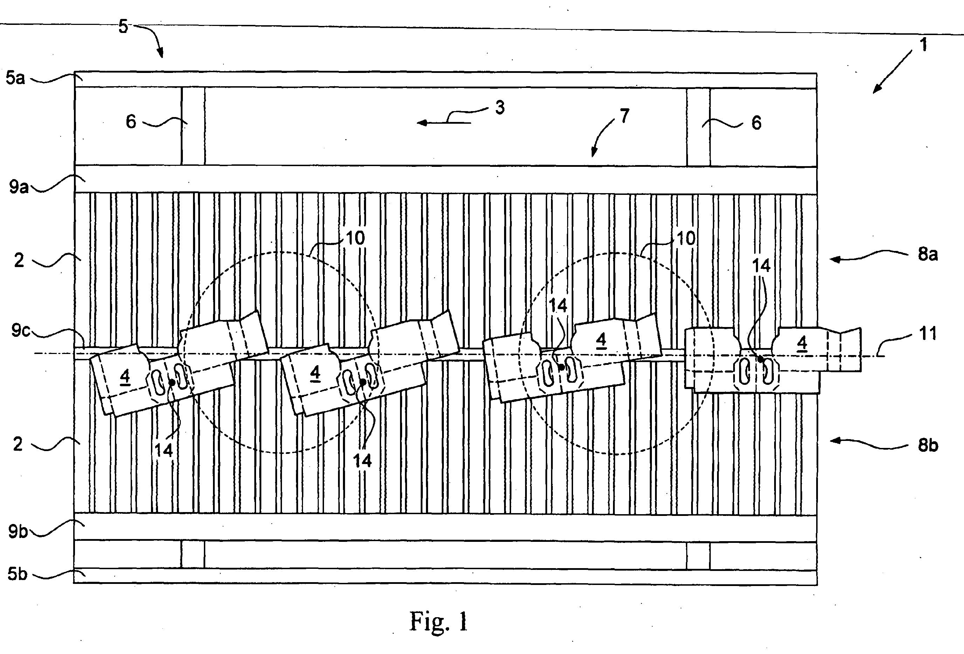

La figure 1 est une vue de dessus d'un dispositif transporteur 1 à rouleaux 2, tel que connu de l'art antérieur, pour tourner et transporter, dans la direction donnée par la flèche 3, des éléments en plaque 4 de faible masse spécifique. Ce dispositif transporteur comprend notamment un bâti 5 formé d'une paroi verticale droite 5a et d'une paroi verticale gauche 5b parallèle à la précédente.

A noter que les qualificatifs droite et gauche se réfèrent au sens de déplacement des éléments en plaque indiqué par la flèche 3. Il en sera de même pour les termes amont et aval qui seront utilisés dans la présente description, en référence respectivement à l'entrée et à la sortie du dispositif transporteur.

Les parois verticales 5a, 5b maintiennent entre elles des moyens de guidage constitués de deux entretoises 6 sur lesquelles peut coulisser un châssis 7, dans une direction transversale par rapport à la direction de défilement des éléments en plaque. Ce châssis 7 porte deux voies parallèles de rouleaux 2, à savoir une voie de droite 8a et une voie de gauche 8b, respectivement maintenues entre une joue droite 9a et une joue centrale 9c, et entre cette joue centrale 9c et une joue gauche 9b. Les rouleaux 2 de chacune des deux voies 8a, 8b sont entraînés à des vitesses respectives différentes au moyen de deux mécanismes d'entraînement indépendants, non illustrés ici pour ne pas charger davantage la figure.

En dessous du plan des rouleaux 2, se trouvent des moyens d'aspiration 10, telles que des ventilateurs tournant à l'envers, permettant d'améliorer l'adhérence des éléments en plaque de faible masse spécifique en augmentant le frottement de ces éléments sur les rouleaux.

Les voies de droite et de gauche définissent entre elles une ligne de séparation 11 mitoyenne, illustrée par un trait mixte, que doivent nécessairement chevaucher les éléments en plaque pour pouvoir les faire pivoter.

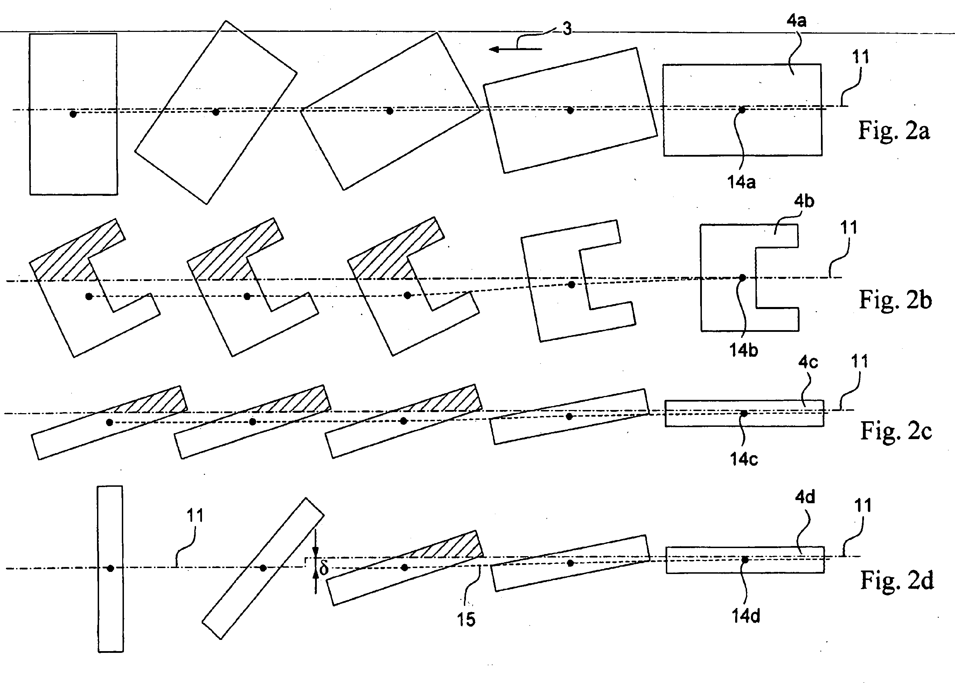

Afin de mieux comprendre l'effet qui résulte à la fois de l'application des moyens d'aspiration 10 et de la différence de vitesses des deux voies 8a, 8b sur les éléments en plaque 4 convoyés, nous nous référons à présent aux figures 2a, 2b et 2c. Ces dernières schématisent respectivement les défilements de trois éléments en plaque 4a, 4b, 4c de formes différentes, et plus précisément les positions relatives des surfaces de ces éléments en contact avec le plan du transporteur par rapport à la ligne de séparation 11 des deux voies 8a, 8b.

Le centre de masse ou point d'équilibre de chaque élément en plaque 4a, 4b, 4c est illustré respectivement par les barycentres 14a, 14b, 14c. Dans le cas où un élément en plaque, semi-plié, apparaîtrait comme étant parfaitement symétrique et homogène, le barycentre correspondrait au centre de gravité de la surface illustrée. Les figures 2a, 2b, 2c ont pour but de faciliter la compréhension de la problématique rencontrée dans l'art antérieur à l'utilisation d'un dispositif tel que celui illustré à la figure 1.

Le premier cas étudié est celui donné à la figure 2a représentant le défilement d'un premier élément en plaque 4a, de forme simple et sensiblement symétrique par rapport à l'axe longitudinal de la machine illustré par la ligne de séparation 11. Conformément au sens de la flèche 3, l'élément en plaque 4a transite, sur le plan du dispositif transporteur, en opérant une rotation de 90° dans le sens inverse des aiguilles d'une montre. Le sens de cette rotation nous indique que les rouleaux 2 de la voie de droite 8a tournent donc plus vite que ceux de la voie de gauche 8b, tels qu'illustrés dans la figure 1. Bien que le barycentre 14a de cet élément ne soit pas exactement disposé sur la ligne de séparation 11 des voies 8a, 8b, les portions de surface en prises avec chacune de ces voies sont suffisamment importantes et égales pour que la rotation puisse s'effectuer correctement.

Or, il a été constaté que certaines boîtes, présentant notamment une certaine asymétrie, cessent subitement de tourner et n'achèvent plus leur rotation. Cette situation particulière est présentée schématiquement à la figure 2b, par l'illustration de la transition d'un élément en plaque 4b présentant une telle asymétrique.

Situé, en son point de départ, dans une position même plus favorable que celle illustrée dans le cas de la figure 2a, on constate que l'élément en plaque 4b entame logiquement une rotation pour les mêmes raisons que celles évoquées précédemment. Or, du fait de cette rotation, la portion de surface en contact avec la voie de droite se réduit peu à peu au profit de celle en contact avec la voie de gauche. La résultante des forces d'aspiration, qui plaque l'élément contre les rouleaux du transporteur, devient donc plus importante à gauche qu'à droite. De ce fait, le barycentre 14b de l'élément en plaque 4b se déplace de sa position initiale en direction de la voie de gauche.

Lorsque continue la rotation de l'élément en plaque 4b, il arrive un moment où la portion de surface, hachurée, en contact avec la voie de droite devient trop petite par rapport à celle en contact avec le transporteur de gauche. La résultante des forces d'aspiration appliquée à cette dernière portion est alors trop importante par rapport à celle de la portion opposée. L'élément en plaque est alors entraîné que par une seule des deux voies, en l'occurrence celle de gauche, en ignorant celle de droite. La portion de surface située à droite de l'élément en plaque ne fait donc plus que glisser sur la voie de droite, en supprimant ainsi toute rotation possible.

Les paramètres qui sont influant dans ce phénomène sont très nombreux et rendent de ce fait toute prédiction du lieu ou du moment exact où l'effet de rotation sera interrompu quasiment impossible. Parmi ces paramètres, on mentionnera la forme de l'élément en plaque semi-plié, la matière utilisée (carton ondulé, carton compact, matière synthétique, etc...), la rugosité de cette matière ou l'adhérence relative entre cette matière et la surface des rouleaux, l'intensité de la force d'aspiration, la différence de vitesses des deux voies ainsi que l'inertie de l'élément en plaque à son arrivée dans le dispositif de pivotement. De plus, il convient également d'ajouter à cette liste l'effet ressort des pans de l'élément en plaque qui ont déjà été pliés et qui, lorsqu'ils sont maintenus pliés par des organes de maintien, tels que grilles ou barres d'appui, généralement situés au-dessus du plan du transporteur, tendent à faire bomber la surface de l'élément en plaque comme pour le décoller des rouleaux. Le frottement des parties pliées de l'élément en plaque sur les organes de maintien évoqués ci-dessus, fait également partie de ces paramètres, de même que la présence et la position d'éventuelles parties gaufrées dans la surface de l'élément en plaque en contact avec le transporteur, et bien sûr le positionnement de cet élément par rapport à la ligne de séparation 11, à l'entrée du dispositif de pivotement.

Outre les éléments en plaque présentant une certaine dissymétrie, le même problème a pu être constaté avec des éléments en plaque 4c présentant un fort rapport longueur/largeur, tel qu'illustré schématiquement à la figure 2c. Bien que l'élément ne présente a priori aucune dissymétrie, il suffit cependant que le barycentre 14c d'un tel élément ne soit pas exactement aligné sur la ligne de séparation 11 à l'entrée du dispositif pour que se produise un déséquilibre grandissant des portions de surface en contact avec chacune de ces voies. Dans cette figure, on constate là aussi que la portion hachurée est plus petite que la portion en contact avec le transporteur gauche, tuant ainsi l'effet de rotation appliqué à l'élément en plaque pour les mêmes raisons que celles évoquées précédemment.

Le principe de la solution suggérée par la présente invention à ce problème est illustrée schématiquement à la figure 2d. Cette dernière présente un élément en plaque 4d, identique à l'élément en plaque 4c, qui est positionné de la même façon qu'à la figure 2c. Ainsi, il doit être constaté que les conditions de départ sont elles aussi parfaitement identiques. De ce fait, au début de la rotation on constate également, par rapport à la ligne de séparation 11, un éloignement du barycentre 14d, lequel suit une ligne imaginaire 15, illustrée par un trait interrompu. Cet éloignement se poursuit jusqu'au moment où l'élément en plaque 14d cesse de pivoter. Dès lors, la figure 2d montre un brusque changement dans la ligne de séparation 11 qui soudain se rapproche d'une quantité 5 jusqu'à venir, dans cet exemple, s'aligner sur la ligne imaginaire 15 laissée par la trace du barycentre 14d. Dès les premiers instants de ce rapprochement, l'équilibre entre les deux portions de surface, chacune en contact avec l'une des voies 8a, 8b, se rétabli, les forces appliquées aux portions de surface gauche et droite s'équilibrent et le pivotement de la boîte peut être repris jusqu'à son achèvement complet.

De cette solution est suggérée une méthode de pivotement qui consiste à maintenir le barycentre 14 de chaque élément en plaque 4 suffisamment proche de la ligne de séparation 11 de façon à ce que l'effet de rotation, appliqué à ces éléments en plaque, permette d'achever pleinement la rotation escomptée. Ainsi, on comprendra qu'il n'est pas nécessaire, contrairement à ce que présente la figure 2d, d'atteindre l'arrêt de cet effet pour rapprocher la ligne de séparation 11 du barycentre de l'élément en plaque. Avantageusement, un pivotement continu de l'élément en plaque permettra de réduire la longueur utile du dispositif de pivotement.

Aussi, on comprendra que l'efficacité maximale de cet effet de rotation sera obtenue lorsque le barycentre de l'élément en plaque suit parfaitement la ligne de séparation des voies de droite 8a et de gauche 8b. Bien que cet état de fait puisse difficilement être appliqué dans tous les cas, on préférera opter pour une solution consistant à procéder à au moins un rapprochement du barycentre 14 avec la ligne de séparation 11.

Etant d'un caractère relatif, ce rapprochement peut être obtenu soit par le déplacement de la ligne de séparation des voies en direction du barycentre de l'élément en plaque, soit par le déplacement de l'élément en plaque en direction de la ligne de séparation des voies.

Du fait que la notion de barycentre fasse intervenir la répartition des masses de l'élément en plaque ainsi que les forces appliquées sur cet élément, le rapprochement en question peut également être opéré par l'application d'une force additionnelle sur la portion de surface gauche et/ou droite de l'élément en plaque.

Il est bien clair qu'une combinaison de ces différentes solutions peut également être envisagée afin d'obtenir le rapprochement relatif du barycentre avec la ligne de séparation des voies.

On comprend donc que l'ensemble des interactions créées par tous les paramètres qui influencent le comportement de l'élément en plaque, ne permette pas de déterminer à l'avance et avec précision ni le lieu ni le moment où l'élément en plaque va commencer et/ou s'arrêter de pivoter, ni sa vitesse réelle de rotation. Ainsi, dans la pratique, il conviendra de faire appel à l'expérience et au doigté acquis dans ce domaine par le conducteur de la machine pour déterminer la correction la plus appropriée. Cette dernière est fonction des seules grandeurs variables, à savoir la valeur δ du décalage, les vitesses des deux voies, les forces d'aspiration appliquées aux éléments en plaque ainsi que le lieu et l'instant de l'application de ces trois premières grandeurs sur ces éléments.

Le dispositif de pivotement d'éléments en plaque selon l'invention comprend un transporteur plan, semblable au dispositif transporteur 1, pourvu de moyens additionnels spécifiques qui vont être décrits ci-après et qui permettront de déplacer successivement le barycentre de chaque élément en plaque en direction de la ligne de séparation 11 des voies 8a, 8b.

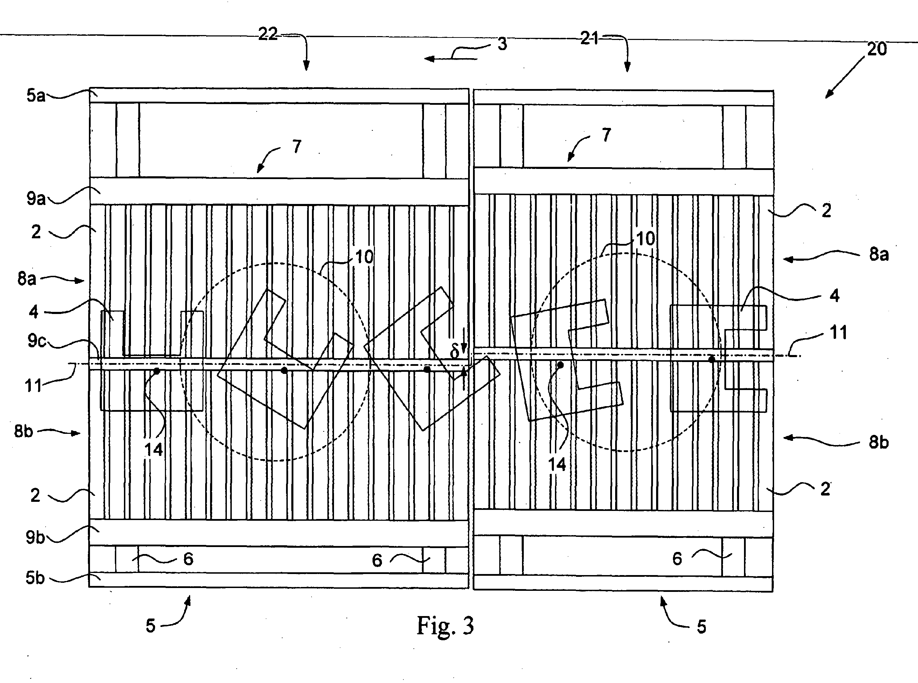

En référence à la figure 3, celle-ci montre un dispositif de pivotement 20, objet de la présente invention, mettant en oeuvre au moins un déplacement de la ligne de séparation 11 des voies 8a, 8b en vue de rapprocher les barycentres des éléments en plaque, transitant sur ce dispositif, de cette ligne de séparation 11.

Pour ce faire, le dispositif de pivotement 20 d'éléments en plaque 4 comprend un premier transporteur 21 plan, semblable en tout point au dispositif transporteur 1 décrit préalablement, ainsi qu'en guise de moyens additionnels au moins un second transporteur 22. Selon le mode de réalisation préféré, le second transporteur 22 est semblable au premier transporteur 21, s'y trouve accolé à ce dernier et est disposé de façon à ce que les lignes de séparation 11 de ces deux transporteurs 21, 22 adjacents soient décalées l'une avec l'autre.

Grâce à ce dispositif, il devient possible de positionner latéralement chacun des transporteurs 21, 22 d'une façon totalement indépendante en créant entre eux un décalage d'une valeur δ entre leurs lignes de séparation 11 respectives.

En guise de variante, il est bien clair qu'il serait également possible de prévoir un dispositif de pivotement 20 agencé dans un seul bâti 5. Ce dernier soutiendrait au moins deux paires d'entretoises 6 sur lesquelles pourraient coulisser au moins deux châssis 7 successifs dans une direction transversale par rapport à la direction de défilement des éléments en plaques donnée par la flèche 3.

Comme bien visible sur la figure 3, chaque transporteur 21, 22 est doté de moyens d'aspiration 10. Ces derniers exercent sur les éléments en plaque 4 convoyés une force qui, de préférence, est de même intensité. Cependant, il est également prévu que les moyens d'aspiration 10 de ces deux transporteurs adjacents 21, 22 puissent exercer, successivement sur le même élément en plaque, des forces différentes. Ce moyen d'action supplémentaire permettrait d'accroître les possibilités visant à agir sur les éléments en plaque en vue de déplacer leur barycentre 14 par rapport à la ligne de séparation des voies 8a, 8b.

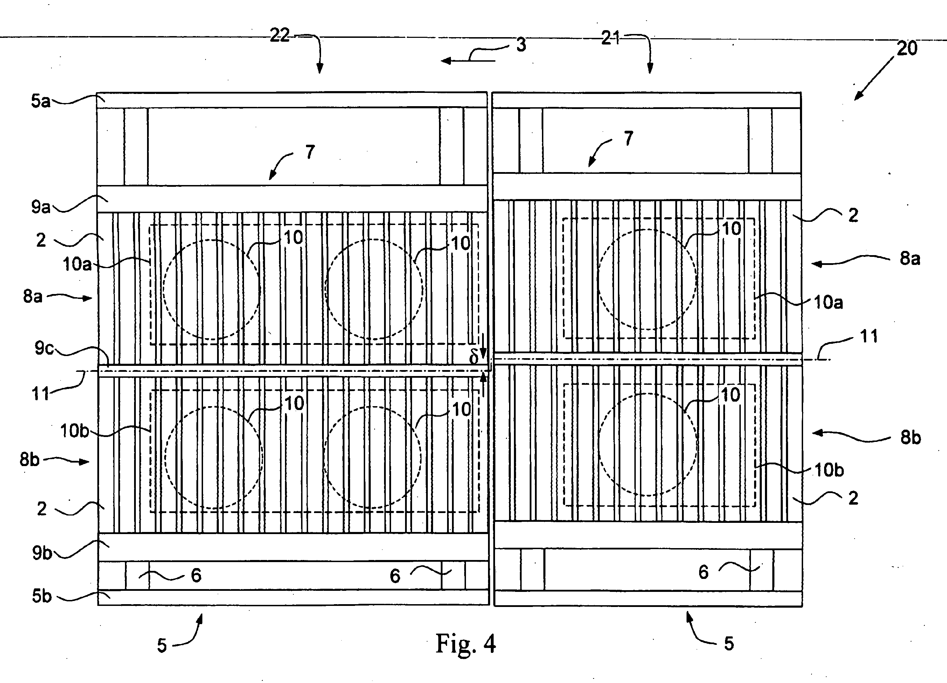

La figure 4 illustre, dans une première variante, un autre mode de réalisation du dispositif de pivotement 20 dans lequel les moyens d'aspiration 10 de chacun des transporteurs 21, 22 ont été divisés en au moins deux groupes 10a, 10b de façon à pouvoir agir, simultanément sur un même élément en plaque, d'une manière indépendante et différentiée entre les voies de droite et de gauche. De préférence, on mentionnera que les transporteurs 21, 22 sont tous ou en partie équipés de tels moyens d'aspiration. Avantageusement, cette variante permet de déplacer successivement le barycentre de chaque élément en plaque par rapport à la ligne de séparation 11 sans nécessairement agir sur les déplacements latéraux des transporteurs pour en faire varier la valeur δ du décalage entre leurs lignes de séparation respectives. Avantageusement encore, il est également possible d'influencer la position du barycentre de chaque élément en plaque en agissant conjointement sur le réglage de la valeur δ dudit décalage et sur le réglage de la différence des forces d'aspiration entre les voies de droite et de gauche, via les groupes 10a, 10b.

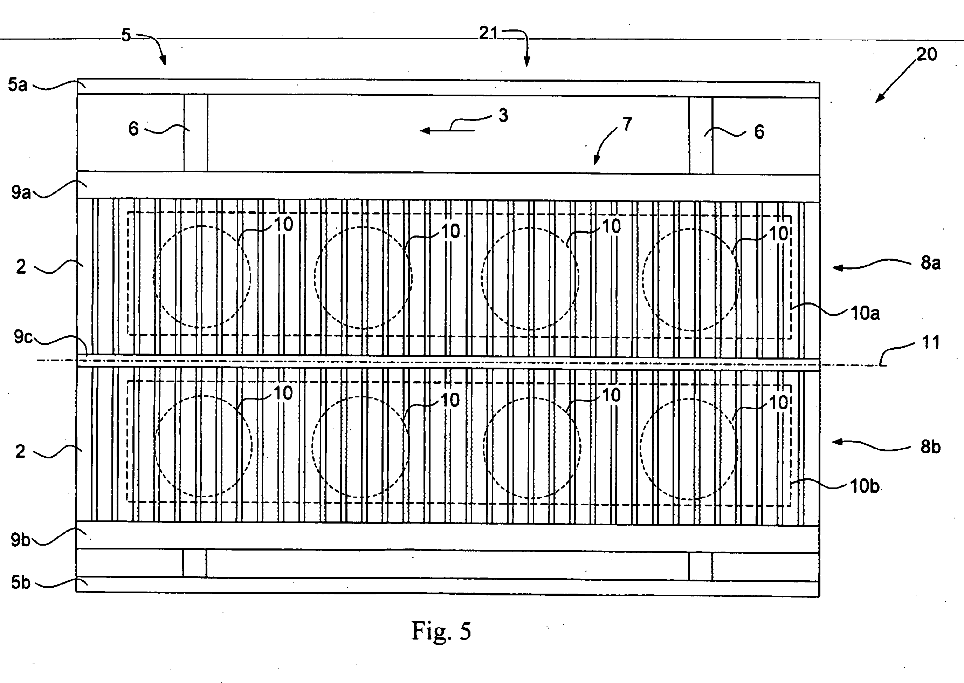

La figure 5 illustre une variante du dispositif de pivotement 20 dans laquelle les moyens additionnels, permettant de déplacer successivement le barycentre de chaque élément en plaque en direction de la ligne de séparation 11, sont seulement constitués de moyens d'aspiration 10 agencés sous lesdites voies 8a, 8b d'une façon distincte et séparée. Le corps du dispositif de pivotement 20 étant formé d'un seul transporteur 21 semblable au dispositif transporteur 1 illustré dans la figure 1.

Selon la figure 5, une pluralité de moyens d'aspiration 10 sont disposés à la suite les uns des autres sous chacune des voies 8a, 8b en au moins deux groupes 10a, 10b. Les moyens d'aspiration 10 du premier groupe 10a sont agencés sous la voie de droite 8a et peuvent exercer une force d'aspiration indépendante de celle engendrée par les moyens d'aspiration du deuxième groupe 10b agencés sous la voie de gauche 8b. De préférence, chaque moyen d'aspiration 10 de chaque groupe pourrait également être commandé d'une manière indépendante de façon à pouvoir faire varier la force d'aspiration le long de chacune des voies 8a, 8b.

Afin d'améliorer l'effet différentiel de l'aspiration engendré par chacune des voies, il serait également possible de prévoir une séparation physique entre ces deux voies, sous les rouleaux 2, le long de la ligne de séparation 11 par exemple. Une telle séparation physique pourrait être réalisée au moyen d'une paroi ou de deux caissons distincts, chacun agencé sous une des voies 8a, 8b.

Grâce au mode de réalisation de cette seconde variante, il devient possible d'augmenter, sous l'une des voies, la force exercée sur les éléments en plaque en un lieu donné, le long du transporteur 21. Ainsi, par exemple, en augmentant la force d'aspiration des deux moyens d'aspiration 10 aval de la voie de droite 8a par rapport à ceux de la voie opposée, on créera un déplacement des barycentres des éléments en plaque se trouvant dans cette zone, à cheval sur la ligne de séparation 11. En référence aux illustrations données dans les figures 2b et 2c, les barycentres de ces éléments en plaques 4b, 4c se décaleront jusqu'à se rapprocher de la ligne de séparation 11 en permettant de ce fait d'achever la rotation de chacun de ces éléments d'une manière analogue à celle illustrée à la figure 2d.

Selon l'illustration donnée à la figure 5, on remarque que le dispositif de pivotement 20 ne comprend qu'un transporteur 21 auquel ont été ajoutés lesdits moyens d'aspiration 10 de sorte à ce que ces derniers puissent exercer, simultanément sur un même élément en plaque, des forces différentes entre la voie de droite 8a et la voie de gauche 8b.

Finalement, bien que techniquement plus difficile à réaliser, on se limitera à mentionner encore la possibilité d'une variante supplémentaire dans laquelle lesdits moyens additionnels seraient constitués par au moins un organe de déplacement alternatif ajustable latéralement, longitudinalement et angulairement au-dessus du plan du transporteur 21. Un tel organe de déplacement pourrait être constitué par une butée poussoir ou une tirette actionnée dans un mouvement alternatif de va-et-vient par un actuateur asservi à la vitesse de défilement des éléments en plaque. Un tel organe de déplacement permettrait de translater localement ou ponctuellement les éléments en plaque, un à un durant leur défilement sur le transporteur 21, en direction de la ligne de séparation 11 des voies 8a, 8b sans faire varier l'angle de leur position par rapport à cette même ligne. On comprendra que cette variante additionnelle, techniquement moins performante que les précédentes en raison du mouvement de va-et-vient nécessaire à cet organe, pourrait être malgré tout une solution envisageable dans le cas où les éléments en plaque ne défileraient qu'à vitesse réduite et présenteraient une découpe de forme relativement simple.

## Revendications

1. Dispositif de pivotement (20) d'éléments en plaque (4) défilant, au sein d'une machine les travaillant, comprenant un transporteur (21) plan doté de deux voies (8a, 8b) parallèles, respectivement une gauche et une droite, aptes à être animées de vitesses différentes et définissant entre elles une ligne de séparation (11) mitoyenne sur laquelle lesdits éléments en plaque (4) sont aptes à être mis en rotation, autour d'un axe perpendiculaire au plan dudit transporteur (21), par l'effet résultant de l'application de chacune des deux vitesses sur une portion gauche et sur une portion droite ainsi définies par la ligne de séparation pour chaque élément en plaque, des moyens d'entraînement distincts à vitesse réglable de chacune desdites voies, des moyens d'aspiration (10) pour exercer sur lesdits éléments en plaque (4) une force dirigée vers le bas perpendiculairement au plan du transporteur (21) ainsi qu'un bâti (5) équipé de moyens de guidage (6) permettant le déplacement latéral du transporteur (21) par rapport à la ligne de séparation (11), **caractérisé en ce qu'**il comprend des moyens additionnels (22, 10a, 10b) permettant de déplacer successivement le barycentre (14) de chaque élément en plaque (4) en direction de la ligne de séparation (11) des voiles (8a, 8b), lesdits moyens additionnels étant constitués, par au moins un second transporteur (22), semblable au premier transporteur (21), accolé à ce dernier et disposé de façon à ce que les lignes de séparation (11) de deux transporteurs (21, 22) adjacents soient décalées l'une avec l'autre.

2. Dispositif selon la revendication 1, **caractérisé en ce que** les moyens d'aspiration (10) de deux transporteurs (21, 22) adjacents exercent, successivement sur le même élément en plaque (4), des forces différentes.

3. Dispositif selon la revendication 1, **caractérisé en ce que** lesdits transporteurs (21, 22) sont tous ou en partie équipés de moyens d'aspiration (10) répartis en au moins deux groupes (10a, 10b) permettant d'exercer, simultanément sur un même élément en plaque (4), des forces différentes entre la voie de droite (8a) et la voie de gauche (8b).

## Claims

1. Device (20) for pivoting plate elements (4) travelling within a machine processing them, comprising a flat conveyor (21) equipped with two parallel paths (8a, 8b), respectively a left and a right path, which can be driven at different speeds and defining between them a joint separating line (11) on which said plate elements (4) are rotatable about an axis perpendicular to the plane of said conveyor (21), by the effect resulting from the application of each of the two speeds on a left portion and on a right portion as defined by the separating line for each plate element, respective drive means with adjustable speed for each of said paths, suction means (10) for exerting on said plate elements (4) a force directed downwards perpendicularly to the plane of the conveyor (21), as well as a frame (5) equipped with guide means (6) allowing lateral movement of the conveyor (21) with respect to the separating line (11), **characterized in that** it comprises additional means (22, 10a, 10b) allowing to successively move the barycenter (14) of each plate element (4) towards the separating line (11) of the paths ( 8a, 8b), said additional means comprise at least a second conveyor (22), similar to the first conveyor (21), joined to it and disposed so that the separating lines (11) of two adjacent conveyors (21, 22) are offset from one another.

2. Device according to claim 1, **characterized in that** the suction means (10) of two adjacent conveyors (21, 22) exert, successively on the same plate element (4), different forces.

3. Device according to claim 1, **characterized in that** said conveyors (21, 22) are entirely or partly equipped with suction means (10) distributed in at least two groups (10a, 10b) allowing to exert, simultaneously on a same plate element (4), different forces between the right path (8a) and the left path (8b).

## Patentansprüche

1. Vorrichtung (20) zum Schwenken von Plattenelementen (4), die innerhalb einer sie verarbeitenden Maschine durchlaufen, umfassend einen flachen Förderer (21), ausgestattet mit zwei parallelen Bahnen (8a, 8b), beziehungsweise eine linke und eine rechte, die mit verschiedenen Geschwindigkeiten angetrieben werden können und zwischen ihnen eine gemeinsame Trennlinie (11) definieren, auf welcher die besagten Plattenelemente (4) um eine Achse senkrecht zur Ebene des besagten Förderers (21) gedreht werden können, dies durch die Wirkung resultierend aus der Anwendung von jeder der zwei Geschwindigkeiten auf einen linken Teil und auf einen rechten Teil, wie durch die Trennlinie für jedes Plattenelement definiert, jeweilige Antriebsmittel mit einstellbarer Geschwindigkeit von jeder der besagten Bahnen, Saugmittel (10), um auf die besagten Plattenelemente (4) eine Kraft auszuüben, die abwärts senkrecht zur Ebene des Förderers (21) gerichtet ist, sowie einen Rahmen (5), der mit Führungsmittel (6) ausgestattet ist, welche die seitliche Verschiebung des Förderers (21) in Bezug auf die Trennlinie (11) erlauben, **dadurch gekennzeichnet, dass** sie zusätzliche Mittel (22, 10a, 10b) umfasst, welche erlauben, den Schwerpunkt (14) von jedem Plattenelement (4) in Richtung der Trennlinie (11) der Bahnen (8a, 8b) nacheinander zu verschieben, wobei die besagten zusätzlichen Mittel mindestens einen zweiten Förderer (22) umfassen, ähnlich dem ersten Förderer (21), der mit letzerem verbunden und so angeordnet ist, dass die Trennlinien (11) von zwei angrenzenden Förderern (21, 22) zueinander versetzt sind.

2. Vorrichtung gemäss Anspruch 1, **dadurch gekennzeichnet, dass** die Saugmittel (10) von zwei angrenzenden Förderer (21, 22), nacheinander auf das gleiche Plattenelement (4), verschiedene Kräfte ausüben.

3. Vorrichtung gemäss Anspruch 1, **dadurch gekennzeichnet, dass** die besagten Förderer (21, 22) vollständig oder teilweise mit Saugmittel (10) ausgestattet sind, die in mindestens zwei Gruppen (10a, 10b) verteilt sind, und erlauben, gleichzeitig auf einem gleichen Plattenelement (4) verschiedene Kräfte zwischen der rechten Bahn (8a) und der linken Bahn (8b) auszuüben.
